# EUROPÄISCHE PATENTSCHRIFT

(11) **EP 0 641 939 B1**
(45) Veröffentlichungstag und Bekanntmachung des Hinweises auf die Patenterteilung: **12.03.1997**
(21) Anmeldenummer: 94110755.9
(22) Anmeldetag: 11.07.1994
(51) Int. Cl.: F16B 5/06, F16B 5/12, B60R 13/02

(54) **Verbindungselement**
Fastening device
Dispositif de fixation

(30) Priorität: 06.09.1993 DE 4330102
(43) Veröffentlichungstag der Anmeldung: 08.03.1995
(60) Teilanmeldung: 96109881.1
(73) Patentinhaber: TRW United-Carr GmbH & Co. KG, D-67677 Enkenbach-Alsenborn (DE)
(72) Erfinder: Kraus, Willibald, D-67269 Grünstadt (DE)
(74) Vertreter: Eder, Thomas, Dr.-Ing.

(56) Entgegenhaltungen:
- DE-A- 3 933 305
- DE-C- 4 014 589
- DE-U- 9 210 449
- US-A- 5 195 793

## Beschreibung

Die Erfindung betrifft ein Verbindungselement, insbesondere zur Montage von Türverkleidungen von Kraftfahrzeugen.

Bekannte Verbindungselemente sind üblicherweise als einfacher Clip ausgebildet, der am zu befestigenden Teil angeordnet wird, wobei der Clip beispielsweise mittels einer in seinem vorderen Bereich vorgesehenen Rastnase in eine Ausnehmung oder Bohrung in einem Trägerteil eingedrückt werden kann.

Derartige Verbindungselemente haben jedoch den Nachteil, daß eine Demontage häufig mit einer Zerstörung des Clips verbunden ist, da die Rastnase wegen der bei einem Fahrzeug auftretenden Vibrationen und Stöße so ausgebildet sein muß, daß ein unbeabsichtigtes Lösen des Verbindungselements ausgeschlossen ist.

Des weiteren haben derartige Verbindungselemente den Nachteil, daß ein Ausgleich von Fertigungstoleranzen kaum oder nur in sehr engen Grenzen möglich ist. Dabei sind insbesondere Toleranzen in der Längsachse der Verbindungselemente mit bekannten Elementen nicht auszugleichen.

Durch die DE-A-39 33 305 ist ein entweder zwei- oder dreiteiliges Halteelement aus Kunststoff bekannt, das über eine Schnappverbindung mittels einer Rastverbindung zwischen Zwischenelement und Befestigungselement einen Toleranzausgleich in Längsrichtung des Elements sowie einen Toleranzausgleich durch das translatorische Verschieben des Zwischenelements entlang eines stabartigen Elements ermöglicht.

Der Erfindung liegt demgegenüber die Aufgabe zugrunde, ein Verbindungselement, insbesondere zur Montage von Türverkleidungen in Kraftfahrzeugen, zu schaffen, welches den mehrachsigen Ausgleich von Toleranzen ermöglicht und eine einfache Montage sowie eine zerstörungsfreie Demontage der zu verbindenden Teile erlaubt.

Die Erfindung löst diese Aufgabe mit den Merkmalen des Patentanspruchs 1.

Bei der Ausführungsform der Erfindung gemäß Patentanspruch 1 ist ein Toleranzausgleich in der Längsachse des Verbindungselements durch die Verwendung einer aus jeweils mehreren an einem ersten und zweiten Element vorgesehenen Rastrippen gebildeten Rastung möglich. Diese ist vorzugsweise so ausgelegt, daß einerseits eine sichere Verbindung der Teile und andererseits ein zerstörungsfreies Lösen der Verbindung gewährleistet ist.

Das zweite Element ist als einseitig offene Schale ausgebildet, an deren Innenwandung zweite Rastrippen vorgesehen sind, welche mit am Umfang eines Kopfteils des ersten Elements angeordneten ersten Rastrippen zusammenwirken.

Durch die einseitig offene Ausbildung des zweiten Elements ergibt sich der Vorteil, daß zur Montage der zu verbindenden Teile zunächst die ersten Elemente mit ihrer Halterung in das Trägerteil eingesetzt und das damit zu verbindende Teil mit den daran angeordneten zweiten Elementen einfach in die ersten Elemente eingehängt werden kann. Durch Druck auf die Oberseite des zu befestigenden Teils können dann die ersten und zweiten Elemente der Verbindungsteile soweit ineinandergeschoben werden, bis eine zufriedenstellende Befestigung erreicht ist. Eine zerstörungsfreie Demontage ist durch einfaches kräftiges Herausschieben der zweiten Elemente aus den ersten Elementen möglich. Eine sichere Halterung kann dabei dadurch erreicht werden, daß die einseitig offenen zweiten Teile vertikal nach unten bzw. oben ausgerichtet werden, so daß die Teile zusätzlich durch die Schwerkraft in ihrer Position gehalten werden.

Zudem wird durch die einseitig offene Ausbildung der zweiten Teile erreicht, daß auch eine Toleranzausgleich in Richtung des Aufschiebens der zweiten Elemente auf die ersten Elemente bzw. in Richtung des Einschiebens der ersten Elemente in die zweiten Elemente gewährleistet ist.

In einer weiteren Ausbildung der Erfindung ist der Ankerfuß schwimmend mit dem ersten Element des Verbindungsteils verbunden. Dabei kann die schwimmende Verbindung in der Weise erreicht werden, daß der Ankerfuß mittels mehrerer, zumindest in einer Ebene senkrecht zur Längsachse des Verbindungselements federnder Stege verbunden ist. Hierzu kann der Ankerfuß vorzugsweise mit mehreren, von der Innenwandung einer im ersten Element vorgesehenen Bohrung ausgehenden Stegen verbunden sein.

Hierdurch ergibt sich der Vorteil, daß ein weiterer Ausgleich von Toleranzen zumindest in einer zur Längsachse des Verbindungselements senkrechten Ebene ermöglicht wird, so daß mittels diesem Verbindungselement ein Toleranzausgleich in allen drei translatorischen Achsen gewährleistet ist.

Darüber hinaus ermöglicht der schwimmend aufgehängte Ankerfuß auch eine Kippbewegung des Ankerfußes relativ zur Achse des Verbindungselements, so daß in jedem Fall sichergestellt ist, daß der Ankerfuß auch in eine leicht schräg verlaufende Ausnehmung eingesetzt werden kann. Zudem wird hierdurch gewährleistet, daß der üblicherweise oberhalb des Ankerfußes auch zu Dichtzwecken angeordnete Teller plan auf der Oberfläche des Teils anliegt, in welches das erste Element eingesetzt wird.

Weitere Ausführungsbeispiele der Erfindung ergeben sich aus den Unteransprüchen.

Die Erfindung wird nachfolgend anhand von in der Zeichnung dargestellten Ausführungsbeispielen näher erläutert. In der Zeichnung zeigen:
- Fig. 1: perspektivische Ansichten a und b einer Ausführungsform eines erfindungsgemäßen Verbindungselements und
- Fig. 2: eine perspektivische Ansicht einer abgewandelten Ausführung nach Fig. 1

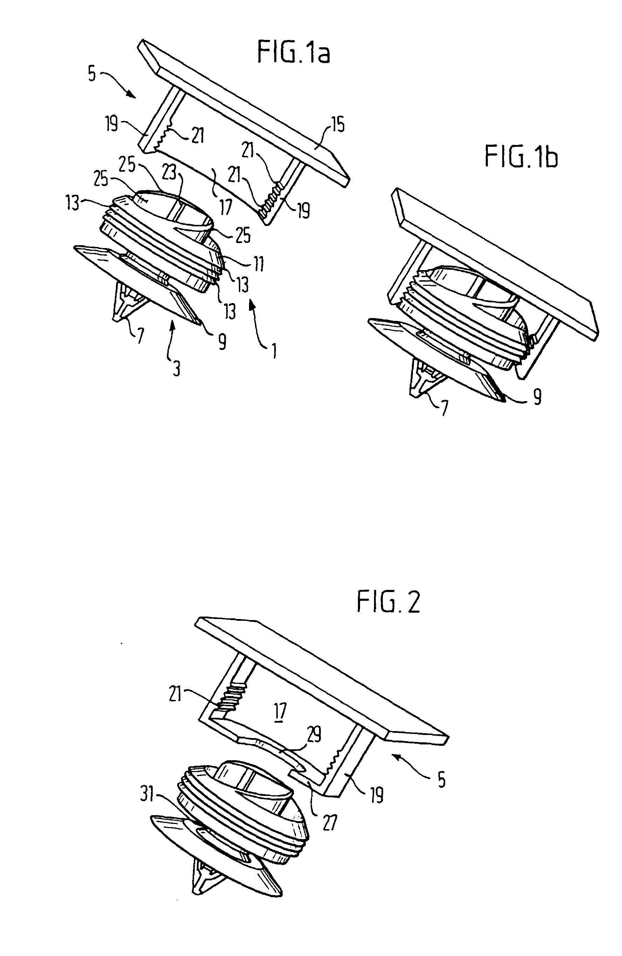

Fig. 1 zeigt eine zweiteilige Ausführungsform des Verbindungselements 1 nach der Erfindung in einer perspektivischen Ansicht vor (Fig. 1a) und nach (Fig. 1b) der Verbindung eines ersten Elements 3 und eines damit zusammenwirkenden zweiten Elements 5.

Das erste Element 3 besitzt z.B. einen Ankerfuß 7, an dem ein Federteller 9 vorgesehen ist, der zur zumindest in axialer Richtung im wesentlichen spielfreien Montage und Halterung des ersten Elements 3 mittels des Ankerfußes 7 in einem ersten der zu verbindenden Teile (nicht dargestellt) dient. Der Ankerfuß wird dabei, wie üblich, beispielsweise in eine Ausnehmung an der Innenseite einer Fahrzeugtür eingesetzt und verrastet.

Das erste Element 3 umfaßt des weiteren ein Kopfteil 11, das, wie in Fig. 1 dargestellt, im Querschnitt kreisförmig ausgebildet sein kann. Am äußeren Umfang des Kopfteils 11 sind mehrere, vorzugsweise über den gesamten Umfang umlaufende Rastnasen 13 vorgesehen.

Das zweite Element 5 des Verbindungselements 1 umfaßt eine Grundplatte 15, die an einem zweiten der zu verbindenden Teile, beispielsweise an der Innenseite einer Türverkleidung eines Kraftfahrzeugs, befestigt werden kann. Selbstverständlich kann das Element 5 auch in das zweite der zu verbindenden Teile integriert sein.

An der von dem zweiten zu verbindenden Teil abgewandten Seite der Grundplatte 15 des zweiten Elements 5 ist eine Wandung 17 angeordnet, die im wesentlichen die Form eines halben Hohlzylinders besitzt. Angrenzend an den im Querschnitt halbkreisförmigen Teil der Wandung 17 weist diese jeweils einen gerade verlaufenden Abschnitt 19 auf, an deren Innenseiten mehrere Rastnasen 21 vorgesehen sind.

Die Montage des in Fig. 1 dargestellten, ersten Ausführungsbeispiels der Erfindung kann zum einen in der Weise erfolgen, daß zunächst das erste Element 3 in das erste der zu verbindenden Teil eingesetzt wird und anschließend das am zweiten der zu verbindenden Teile angeordnete zweite Element 5 mittels der Rastrippen 21 auf das Kopfteil 11 des ersten Elements 3 mit seinen Rastnasen 13 in axialer Richtung aufgeschoben wird.

Zum anderen kann das zweite der zu verbindenden Teile mit den daran angeordneten zweiten Elementen 5 auch zunächst seitlich auf die Kopfteile 11 der ersten Elemente 3 aufgeschoben werden, so daß bereits hierdurch die Rastnasen 13 und 21 in Eingriff gebracht werden. Anschließend können dann durch einen axial auf eines der zu verbindenden Teile ausgeübten Druck so fest in Eingriff gebracht werden, daß die zu verbindenden Teile im wesentlichen spielfrei miteinander verbunden sind. Dieser Zustand ist in Fig. 1b dargestellt.

Eine Demontage der Verbindungselemente kann dadurch erfolgen, daß die verbundenen Teile so zueinander verschoben werden, daß die Rastnasen 13, 21 der ersten und zweiten Elemente 3, 5 außer Eingriff gebracht werden. Selbstverständlich kann bei geeigneter Wahl der Form oder Flankensteilheit der Rastnasen eine Demontage ggf. auch durch Ausübung einer axialen Zugkraft auf die verbundenen Teile erfolgen. In diesem Fall ist jedoch dafür Sorge zu tragen, daß die Rastrippen und die Federwirkung der diese tragenden Teile so aufeinander abgestimmt sind, daß ein unbeabsichtigtes Lösen der Verbindungselemente, beispielsweise durch Stöße oder Vibrationen, sicher vermieden wird.

Hierzu kann das Kopfteil 11 auch im Querschnitt oval oder rechteckförmig ausgebildet sein, da hierdurch der Eingriff der Rastrippen 13 mit den gerade verlaufenden Rastrippen 21 verbessert wird.

Durch diese mehrstufige axiale Verrastung der ersten und zweiten Elemente 3, 5 des Verbindungselements ist der Ausgleich axialer Toleranzen möglich, so daß ein unerwünschtes Deformieren der zu verbindenden Teile in jedem Fall verhindert werden kann.

Darüber hinaus ist bei dem in Fig. 1 dargestellten Verbindungselement auch ein Toleranzausgleich in der Richtung möglich, in der das erste Element 3 in das zweite Element 5 einschiebbar ist.

Zudem kann, wie in Fig. 1 dargestellt, der Grundkörper und damit auch der Ankerfuß 7 schwimmend am ersten Element 3 angeordnet sein. Hierzu ist ein Fortsatz 23 des Ankerfußes 7 in einer axialen Bohrung des Kopfteils 11 durch drei federnde Stege 25 gehalten, die eine Bewegung des Ankerfußes in einer Ebene senkrecht zur Achse des Verbindungselement 1 bzw. der ersten Elements 3 zulassen.

Hierdurch ergibt sich der Vorteil, daß neben einem axialen Toleranzausgleich und einem Toleranzausgleich in Einschubrichtung des ersten und zweiten Teils auch ein Toleranzausgleich in jeder Richtung einer zu Längsachse senkrechten Ebene möglich ist.

D.h., das Verbindungselement 1 gewährleistet einen Toleranzausgleich in allen drei translatorischen Achsen und bei geeigneter Ausbildung der schwimmenden Aufhängung des Ankerfußes 7 auch eine Kippbewegung des Ankerfußes, so daß dieser auch in schräg zur Achse des Verbindungselements verlaufende Ausnehmungen sicher montierbar ist.

In Fig. 2 ist eine Abwandlung des in Fig. 1 dargestellten Verbindungselements gezeigt, die sich lediglich dadurch unterscheidet, daß das zweite Teil 5 eine Wandung 27 aufweist, die mit den Stirnseiten der Wandung 17 verbunden ist und in der eine Ausnehmung 29 ausgebildet ist.

Bei dieser Ausführungsform ist ein Einschieben bzw. Herausziehen des Kopfteils 11 aus dem zweiten Element 5 nicht möglich, da der Hals 31 des ersten Elements 3 in die Ausnehmung 29 eingreift. Eine Demontage ist also ausschließlich durch ein Verschieben der miteinander verbundenen Teile relativ zueinander möglich. Die Wandung 27 dient als Sicherung gegen ein unbeabsichtigtes Lösen des Verbindungselements sowie zur Stabilisierung des schwimmend aufgehängten Ankerfußes 7. Jedoch muß die lichte Weite der Ausnehmung 29 größer gewählt sein, als der Durchmesser des Halses 31, um eine Toleranzausgleich in der senkrechten Ebene nicht zu blockieren.

Gleichzeitig muß der Hals 31 in seiner axialen Ausdehnung so bemessen sein, daß das Kopfteil innerhalb der Wandungen 17, 19, 27 über einen bestimmten Bereich axial verschiebbar bleibt, um mittels der Rastrippen 13, 21 einen ausreichenden axialen Toleranzausgleich zu sicherzustellen.

Im übrigen kann im Fall des in Fig. 2 dargestellten Ausführungsbeispiels auf die vorstehenden Ausführungen betreffend die in Fig. 1 gezeigte Ausführungsform verwiesen werden.

Die Erfindung ist jedoch nicht auf das vorstehend erläuterte Ausführungsbeispiel beschränkt, sondern umfaßt selbstverständlich z.B. auch alle anderen Kombinationen der dargestellten Verbindungsmöglichkeiten zwischen den ersten und zweiten Elementen. So können z.B. statt des Ankerfußes 7 auch andere Halterungselemente, wie T-Bolzen, Sägezahnbolzen, Elemente für Formaussparungen Anwendung finden.

## Patentansprüche

1. Verbindungselement, insbesondere zur Montage von Türverkleidungen von Kraftfahrzeugen, bestehend aus
einem ersten Element (3), insbesondere mit einem Ankerfuß (7) zur Montage des ersten Elementes (3) in einem ersten Teil, und
einem an einem mit dem ersten Teil zu verbindenden zweiten Teil angeordneten zweiten Element (5), wobei
das erste und zweite Element (3, 5) mittels jeweils mehrerer erster und zweiter Rastrippen (13, 21) derart miteinander verbindbar sind, daß bei der Verbindung des ersten Teils mit dem zweiten Teil ein Ausgleich von Toleranzen in Richtung der Längsachse des Verbindungsteils (1) erfolgen kann
**dadurch gekennzeichnet**,
daß das erste Element (3) ein Kopfteil (11) besitzt, an dessen äußerem Umfang die ersten Rastrippen (13) vorgesehen ist, welche mit den an der Innenseite einer sich im wesentlichen in Richtung der Längsachse des Verbindungselements (1) erstreckenden Wandung (17, 19) des zweiten Elements (5) vorgesehenen zweiten Rastrippen (21) zusammenwirken, und
daß die Wandung (17, 19) des zweiten Elements (5) zumindest in der Weise einseitig offen ausgebildet ist, daß das Kopfteil (11) des ersten Elements (3) aus zumindest dieser einen Richtung in das zweite Element (5) einsetzbar ist.

2. Verbindungselement nach Anspruch 1, **dadurch gekennzeichnet**, daß das Kopfteil (11) im Querschnitt kreisförmig, oval oder rechteckförmig ausgebildet ist.

3. Verbindungselement nach Anspruch 1 oder 2, **dadurch gekennzeichnet**, daß das erste Element (3) einen Hals (31) aufweist, welcher in eine Ausnehmung (29) einer mit der Wandung (17, 19) des zweiten Elements (5) verbundenen stirnseitigen Wandung (27) eingreift.

4. Verbindungselement nach einem der Ansprüche 1 bis 3, **dadurch gekennzeichnet**, daß der Ankerfuß (7) mittels einem oder mehrerer zumindest in einer Ebene senkrecht zur Längsachse des Verbindungselements (1) federnder Stege (25) mit dem ersten Element (3) verbunden ist.

5. Verbindungselement nach Anspruch 4, **dadurch gekennzeichnet**, daß das Kopfteil (11) eine axiale Bohrung aufweist und die Stege (25) zwischen der Innenwandung und einem Fortsatz (23) des Ankerfußes (7) angeordnet sind.

## Claims

1. Fastening element, in particular for fitting door trim pads of motor vehicles, comprising a first element (3), in particular with an anchoring foot (7) for fitting the first element (3) in a first part, and a second element (5) arranged on a second part to be fastened to the first part, it being possible for the first and second elements (3, 5) to be connected to one another by means of a plurality of first and second engagement ribs (13, 21) in each case in such a way that, when the first part is fastened to the second part, a compensation of tolerances can take place in the direction of the longitudinal axis of the fastening part (1), characterized in that the first element (3) has a top part (11), on whose outer circumference the first engagement ribs (13) are provided, which interact with the second engagement ribs (21) provided on the inner side of a wall (17, 19) of the second element (5) extending essentially in the direction of the longitudinal axis of the fastening element (1), and in that the wall (17, 19) of the second element (5) is designed to be open on one side at least in such a way that the top part (11) of the first element (3) can be inserted into the second element (5) at least from this one direction.

2. Fastening element according to Claim 1, characterized in that the top part (11) is designed to be circular, oval or rectangular in cross-section.

3. Fastening element according to Claim 1 or 2, characterized in that the first element (3) has a neck (31) which engages in a recess (29) in an end-face wall (27) connected to the wall (17, 19) of the second element (5).

4. Fastening element according to one of Claims 1 to 3, characterized in that the anchoring foot (7) is connected to the first element (3) by means of one or more webs (25) which are resilient at least in a plane perpendicular to the longitudinal axis of the fastening element (1).

5. Fastening element according to Claim 4, characterized in that the top part (11) has an axial bore, and the webs (25) are arranged between the inner wall and a continuation (23) of the anchoring foot (7).

## Revendications

1. Elément de solidarisation, notamment destiné au montage d'habillages de portières de véhicules automobiles, comprenant
un premier élément (3), notamment pourvu d'une embase d'ancrage (7) pour le montage du premier élément (3) dans une première pièce, et
un second élément (5) disposé sur une seconde pièce devant être reliée à la première pièce,
les premier et second éléments (3, 5) pouvant être reliés l'un à l'autre au moyen d'une pluralité de premières et secondes nervures respectives d'encliquetage (13, 21), de telle sorte que, lors de la liaison de la première pièce avec la seconde pièce, une compensation de tolérances puisse avoir lieu dans la direction de l'axe longitudinal de la pièce de solidarisation (1),
caractérisé par le fait
que le premier élément (3) possède une partie frontale (11), sur le pourtour extérieur de laquelle sont prévues les premières nervures d'encliquetage (13) coopérant avec les secondes nervures d'encliquetage (21) prévues à la face interne d'une paroi (17, 19) du second élément (5), qui s'étend pour l'essentiel dans la direction de l'axe longitudinal de l'élément de solidarisation (1) ; et
que la paroi (17, 19) du second élément (5) est de réalisation ouverte au moins d'un côté, de façon que la partie frontale (11) du premier élément (3) puisse être insérée, dans le second élément (5), au moins à partir de cette direction.

2. Elément de solidarisation selon la revendication 1, caractérisé par le fait que la partie frontale (11) est de réalisation circulaire, ovale ou rectangulaire en coupe transversale.

3. Elément de solidarisation selon la revendication 1 ou 2, caractérisé par le fait que le premier élément (3) présente un col (31) qui pénètre dans une échancrure (29) d'une paroi extrême (27), reliée à la paroi (17, 19) du second élément (5).

4. Elément de solidarisation selon l'une des revendications 1 à 3, caractérisé par le fait que l'embase d'ancrage (7) est reliée au premier élément (3) au moyen d'une ou plusieurs membrure(s) (25),douée(s) d'élasticité au moins dans un plan perpendiculaire à l'axe longitudinal de l'élément de solidarisation (1).

5. Elément de solidarisation selon la revendication 4, caractérisé par le fait que la partie frontale (11) présente un canal axial, et les membrures (25) sont interposées entre la face interne de la paroi et un prolongement (23) de l'embase d'ancrage (7).
